# EUROPÄISCHE PATENTSCHRIFT

(11) **EP 2 989 513 B1**
(45) Veröffentlichungstag und Bekanntmachung des Hinweises auf die Patenterteilung: **29.05.2019**
(21) Anmeldenummer: 14714229.3
(22) Anmeldetag: 26.03.2014
(51) Int. Cl.: G05B 19/05, G05B 19/042, H02J 7/00

(54) **VERFAHREN UND VORRICHTUNG ZUR ENERGIEVERSORGUNG EINES FELDGERÄTES BEI DER INBETRIEBNAHME**
METHOD AND APPARATUS FOR SUPPLYING ENERGY TO A FIELD DEVICE DURING START-UP
PROCÉDÉ ET DISPOSITIF D'ALIMENTATION D'UN APPAREIL DE TERRAIN LORS DE SA MISE EN SERVICE

(30) Priorität: 24.04.2013 DE 102013104139
(43) Veröffentlichungstag der Anmeldung: 02.03.2016
(73) Patentinhaber: Endress+Hauser Process Solutions AG, 4153 Reinach (CH)
(72) Erfinder: FIEDLER, Marc, CH-4153 Reinach (CH)
(74) Vertreter: Andres, Angelika Maria
(86) Internationale Anmeldenummer: PCT/EP2014/056036
(87) Internationale Veröffentlichungsnummer: WO 2014/173602

(56) Entgegenhaltungen:
- DE-A1- 10 143 493
- DE-A1-102009 047 538
- DE-A1-102009 048 670
- DE-A1-102010 063 783
- DE-U1- 20 023 865
- DE-U1-202011 103 790

## Beschreibung

Die vorliegende Erfindung bezieht sich auf ein Verfahren zur Inbetriebnahme eines Feldgerätes, eine Vorrichtung zur Inbetriebnahme eines Feldgerätes sowie auf ein Feldgerät.

In industriellen Anlagen werden oftmals sogenannte Feldgeräte zur Steuerung und/oder Überwachung eines, in der Anlage ablaufenden Prozesses eingesetzt. Die Energieversorgung dieser Feldgeräte erfolgt dabei beispielsweise über eine Stromschleife, an welche ein Feldgerät oder mehrere Feldgeräte angeschlossen sind. Die Speisung eines oder mehrere Feldgeräte mit elektrischer Energie erfolgt dabei über ein Speisegerät, wie beispielsweise ein Netzteil, das die zum Betreib des Feldgerätes bzw. der Feldgeräte erforderliche Energie bspw. in Form einer Geleichspannung zur Verfügung stellt.

Insbesondere bei der Inbetriebnahme und dem damit verbundenen Startvorgang eines oder mehrerer Feldgeräte liegt ein erhöhter Spannungs- und/oder Strombedarf der Feldgeräte vor. Dies ist beispielsweise durch das Laden von in dem Feldgerät vorhandenen Kapazitäten bedingt, welche beim Starten des Feldgerätes geladen werden. So ist beispielsweise aus der Offenlegungsschrift WO 2012000996 eine Vorrichtung zur Inbetriebnahme von Feldgeräten bekannt geworden. Vermittels einer dort vorgeschlagenen Starterschaltung werden die Feldgeräte sukzessive mit einer von einer Spannungsquelle bereitgestellten Spannung versorgt.

Zur Energieversorgung der Feldgeräte ist es bekannt geworden, sogenannte Messumformerspeisegeräte einzusetzen. Derartige Messumformerspeisegeräte verfügen beispielsweise über einen Netzanschluss, welchem Netzanschluss elektrische Energie entnommen und den Feldgeräten zugeführt wird. Insbesondere sind Speisegeräte bekannt geworden, die die Anforderungen an den Explosionsschutz erfüllen und eine leistungsbegrenzte Abgabe von elektrischer Energie aufweisen.

Diese Leistungsbegrenzung steht jedoch in Konflikt mit dem Energiebedarf insbesondere während der Inbetriebnahme von einem oder von mehreren Feldgeräten. Beispielsweise weisen Feldgeräte einen während der Inbetriebnahme erhöhten Leistungsbedarf auf. Dies ist beispielsweis, wie bereits erwähnt, durch die erstmalige Ladung von in dem Feldgerät vorhandenen Kapazitäten bedingt. Ferner ist es bei der Inbetriebnahme erforderlich, erstmals Daten, beispielsweise in einen Arbeitsspeicher des Feldgerätes, zu laden oder bestimmte Initialisierungs- und Selbstkalibrierungsfunktionen auszuführen.

Es ist somit unter Umständen nicht möglich, ein Feldgerät, das an ein gemäß der Zündschutzart Eigensicherheit leistungsbegrenztes Messumformerspeisegerät angeschlossen ist, in Betrieb zu nehmen, da die von dem Speisegerät abgegebene Leistung nicht zum Starten des Feldgerätes ausreicht.

DE 10 2010 063783 A1 offenbart ein batteriebetriebenes Feldgerät, wobei die Batterie für eine Mehrzahl von Feldgeräten geeignet ist.

DE 20 2011 103790 U1 offenbart ein Feldgerät mit mehreren Modulen, wobei die Module bei der Inbetriebnahme nacheinander eingeschaltet werden, um einen maximalen Energieverbrauch nicht zu überschreiten, und wobei ein Kondensator als Puffer für elektrische Energie vorgesehen ist.

DE 200 23 865 U1 offenbart ein Feldgerät, welches zusätzlich zur üblichen Energieversorgung, durch eine zusätzliche Energieversorgung versorgt wird.

Es ist somit Aufgabe der vorliegenden Erfindung, die Inbetriebnahme eines Feldgerätes, insbesondere im Falle einer leistungsbegrenzten Speisung, zu ermöglichen.

Die Aufgabe wird erfindungsgemäß durch ein Verfahren zur Inbetriebnahme eines eines Feldgerätes gemäß Anspruch 1, durch eine Vorrichtung gemäß Anspruch 9 und ein Feldgerät gemäß Anspruch 10 zur Verwendung in der voranstehenden Vorrichtung gelöst.

Hinsichtlich des Verfahrens wird die Aufgabe durch ein Verfahren zur Inbetriebnahme eines Feldgerätes gelöst, wobei zur Inbetriebnahme des Feldgerätes ein Energiespeicher zur Speicherung elektrischer Energie vermittels eines, vorzugsweise leistungsbegrenzten, Netzteils geladen wird, und wobei die in dem Energiespeicher gespeicherte elektrische Energie verwendet wird, um das Feldgerät zumindest während der Inbetriebnahme des Feldgerätes, zumindest zeitweise mit elektrischer Energie zu versorgen.

Unter Inbetriebnahme wird dabei nicht nur die erstmalige Nutzung, sondern auch eine Wiederinbetriebnahme des Feldgerätes, wie beispielsweise ein Hardware- oder Softwareset also ein Neustart des Feldgerätes verstanden. Bei dem Feldgerät selbst kann es sich um einen Sensor, einen Aktor, eine Anzeigeeinheit oder dergleichen zur Steuerung und Überwachung eines Prozesses dienenden Gerätschaft handeln. Der Energiespeicher, bei dem es sich beispielsweise um einen Kondensator handelt, dient zur Speicherung von elektrischer Energie, die an das Feldgerät beziehungsweise eine Betriebselektronik des Feldgerätes abgegeben wird. Der Energiespeicher selbst kann ebenfalls Bestandteil des Feldgerätes beziehungsweise der Feldgeräteelektronik sein. Das Netzteil aus dem der Energiespeicher geladen wird, dient bspw. dazu, im regulären Betrieb des Feldgerätes, das heißt nach der Inbetriebnahme bzw. der Startphase des Feldgerätes, das Feldgerät mit elektrischer Energie zu versorgen, die das Feldgerät zum Ausführen seiner bestimmungsgemäßen Funktion benötigt. Bei dem Netzteil kann es sich bspw. um einen Transformator oder ein Schaltnetzteil handeln. Eine Leistungsbegrenzung des Netzteils, wie sie beispielsweise bei einem Einsatz des Feldgerätes in einer explosionsgefährdeten Zone erforderlich ist, kann beispielsweise durch eine in dem Netzteil integrierte, vorzugsweise elektronische, Sicherung erreicht werden.

Anstelle des Netzteils kann auch eine andere Spannungsquelle zur Energieversorgung des Feldgerätes und/oder zur Ladung des Energiespeichers dienen.

Zum Zeitpunkt der Inbetriebnahme des Feldgerätes in der Anlage ist der Energiespeicher bspw. noch in seinem Auslieferungszustand, das heißt, nicht oder nur teilweise geladen. Nach dem Anschließen des Feldgerätes an das Netzteil kann das Feldgerät mit elektrischer Energie aus dem Netzteil versorgt werden. Es ist vorgesehen, dass bevor elektrische Energie von dem Netzteil an das Feldgerät bzw. an die Betriebselektronik des Feldgerätes übertragen wird, zunächst zumindest ein Teil der von dem Netzteil ausgegebenen elektrischen Energie in dem Energiespeicher gespeichert und/oder der Energiespeicher zumindest teilweise geladen wird. Nachdem eine vorgegebene Energiemenge in dem Energiespeicher vorhanden ist, der Energiespeicher also zumindest teilweise geladen ist, kann die in dem Energiespeicher gespeicherte Energie an das Feldgerät abgegeben werden. Die Energieversorgung des Feldgerätes erfolgt also nach dem Verbinden des Feldgerätes mit dem Netzteil erst, wenn in dem Energiespeicher eine vorgegebene Menge an elektrischer Energie gespeichert ist.

In einer Ausführungsform des Verfahrens wird von dem vorzugsweise leistungsbegrenzten Netzteil eine Spannung mit einem ersten Spannungswert ausgegeben. Diese von dem Netzteil ausgegebene Spannung kann einer Inbetriebnahmeeinheit zugeführt werden, welche Inbetriebnahmeeinheit zumindest den vorgeschlagenen Energiespeicher umfasst. Inbetriebnahmeeinheit und Energiespeicher können Bestandteil des Feldgerätes und/oder der Betriebselektronik eines Feldgerätes sein, das an ein Netzteil anschliessbar ist.

Netzteil bzw. Spannungsquelle als auch Inbetriebnahmeeinheit und Betriebselektronik können bspw. auch in ein (einziges) Feldgerät, d.h. Feldgerätgehäuse integriert sein.

In einer weiteren Ausführungsform des Verfahrens wird die vermittels der Inbetriebnahmeeinheit gespeicherte elektrische Energie dem Feldgerät bereitgestellt, wenn für die Inbetriebnahme des Feldgerätes ausreichend Energie in dem Energiespeicher vorhanden ist. Es kann also eine Anpassung des Energiespeichers und dessen Kapazität zur Speicherung elektrischer Energie an das Feldgerät erfolgen. Insbesondere kann die, in dem Energiespeicher vorhandene elektrische Energie zumindest teilweise dem Feldgerät bereitgestellt werden, wenn die, in dem Energiespeicher vorhandene elektrische Energie einen vorgegebenen Schwellwert erreicht beziehungsweise überschreitet. Es kann vorgesehen sein, dass dieser Schwellwert in Abhängigkeit des Feldgerätes, in welches die Inbetriebnahmeeinheit integriert ist oder mit welchem Feldgerät die Inbetriebnahmeeinheit verbunden ist, einen unterschiedlichen Schwellwert aufweist, ab dem die in dem Energiespeicher gespeicherte Energie dem Feldgerät bereitgestellt wird.

In einer weiteren Ausführungsform des Verfahrens gibt die Inbetriebnahmeeinheit eine Spannung mit einem zweiten Spannungswert aus, welche dem Feldgerät zugeführt wird. Für den Fall, dass die Inbetriebnahmeeinheit in das Feldgerät integriert ist, wird die, in dem Energiespeicher vorhandene elektrische Energie der Betriebselektronik des Feldgeräts zugeführt. Der Inbetriebnahmeeinheit wird also eine Spannung mit einem ersten Spannungswert von dem Netzteil, das beispielsweise leistungsbegrenzt ist, zugeführt. Diese erste Spannung dient dann zeitweise, d.h. für einen ersten Zeitraum, dazu, den Energiespeicher der Inbetriebnahmeeinheit zu laden. In einem Normalbetrieb des Feldgerätes, der auf die Inbetriebnahme folgt, dient diese von dem Netzteil ausgegebene Spannung dann zur Versorgung des Feldgerätes mit der dafür benötigten elektrischer Energie. Während des Ladevorgangs des Energiespeichers wird die Betriebselektronik des Feldgerätes beziehungsweise das Feldgerät nicht mit der vom Netzteil ausgegebenen Spannung versorgt, sondern ist bspw. vermittels eines Schalters davon getrennt. Nur wenn der Energiespeicher eine ausreichende Ladung ausweist, wird von der Inbetriebnahmeeinheit eine Spannung mit einem zweiten Spannungswert ausgegeben. Der erste und der zweite Spannungswert können sich dabei voneinander unterscheiden.

In einer weiteren Ausführungsform des Verfahrens, ist der von der Inbetriebnahmeeinheit ausgegebene zweite Spannungswert zumindest zeitweise größer als der von dem vorzugsweise leistungsbegrenzten Netzteil ausgegebene erste Spannungswert. Es wird somit ermöglicht die von einer Spannungsquelle ausgegebene Spannung, zumindest während der Inbetriebnahme eines Feldgerätes, zu transformieren und somit eine Spannungsquelle zur Inbetriebnahme eines Feldgerätes zu verwenden, die normalerweise nicht genügend Spannung zur Inbetriebnahme eines Feldgerätes bereitstellen würde.

In einer weiteren Ausführungsform des Verfahrens liegt der erste als auch der zweite Spannungswert unterhalb einem durch die von einer Zündschutzart Eigensicherheit vorgegebenen Grenzspannungswert. Vorzugsweise ist dabei der zweite Spannungswert höher als der erste Spannungswert. Der Grenzspannungswert kann durch die Kategorie der Zündschutzart Eigensicherheit, für welche das Feldgerät ausgelegt ist und sich eignet, vorgegeben werden. Die entsprechenden Grenzspannungswerte sind in der die Zündschutzart Eigensicherheit betreffenden Norm IEC 60079-11 angegeben.

In einer weiteren Ausführungsform des Verfahrens wird im Feldgerät zumindest während der Inbetriebnahme, zumindest anteilig, sowohl die in dem Energiespeicher gespeicherte elektrische Energie als auch, zumindest anteilig, die von dem Netzteil ausgegebene elektrische Energie zur Verfügung gestellt. Nachdem der Energiespeicher zumindest teilweise aufgeladen ist, kann diese in dem Energiespeicher gespeicherte elektrische Energie dem Feldgerät bereitgestellt werden. Gleichzeitig kann die von dem Netzteil ausgegebene elektrische Energie dem Feldgerät bereitgestellt werden. Zu diesem Zweck kann ein erster Energieversorgungspfad vorgesehen sein, über den das Feldgerät mit dem Netzteil verbunden ist und ferner ein zweiter Energieversorgungspfad vorgesehen sein, über dem das Feldgerät mit dem Energiespeicher verbunden ist. Der erste und der zweite Energieversorgungspfad können sich auch teilweise überlappen.

In einer weiteren Ausführungsform des Verfahrens wird die während der Inbetriebnahme von dem Netzteil an das Feldgerät übertragene elektrische Energie, vorzugsweise vermittels einer Strombegrenzungseinheit, die besonders bevorzugt Bestandteil der Inbetriebnahmeeinheit ist, begrenzt. Bei der Strombegrenzungseinheit handelt es sich bevorzugt um einen Widerstand.

In einer weiteren Ausführungsform des Verfahrens wird ein, sich an den Startvorgang des Feldgerätes anschließender bestimmungsgemäßer Betriebsmodus des Feldgerätes vorzugsweise vermittels der Inbetriebnahmeeinheit erkannt, indem die von der Inbetriebnahmeeinheit ausgegebene Spannung mit der der Strombegrenzungseinheit zugeführten Spannung verglichen wird. Zu diesem Zweck können entsprechende Spannungsabgriffe und eine entsprechende Messvorrichtung zum Vergleich vorgesehen sein.

In einer weiteren Ausführungsform des Verfahrens wird nach Erreichen des bestimmungsgemäßen Betriebsmodus des Feldgerätes ausschließlich das Netzteil zur Energieversorgung des Feldgerätes verwendet. Vorzugsweise wird dabei ausschließlich von dem Netzteil ausgegebene Spannung und eine unmittelbare daraus abgeleitete Spannung zur Energieversorgung des Feldgerätes verwendet.

In einer weiteren Ausführungsform des Verfahrens wird nachdem der bestimmungsgemäße Betriebsmodus, in welchem das Feldgerät vorzugsweise einen im Wesentlichen konstanten Spannungsbedarf aufweist, die Strombegrenzungseinheit überbrückt.

In einer weiteren Ausführungsform des Verfahren wird die von dem Netzteil ausgegebene Spannung von einem ersten Spannungswert vorzugsweise vermittels eines Gleichspannungswandlers auf einen dritten Spannungswert transformiert, welcher dritte Spannungswert der Strombegrenzungseinheit zugeführt wird.

Hinsichtlich der Vorrichtung wird die Aufgabe durch eine Vorrichtung umfassend einen aufladbaren Energiespeicher zur Inbetriebnahme eines Feldgerätes gelöst, wobei der Energiespeicher dazu dient, das Feldgerät zumindest während in der Inbetriebnahme des Feldgerätes zumindest zeitweise mit elektrischer Energie zu versorgen. In einer Ausführungsform der Vorrichtung umfasst die Vorrichtung ferner ein, vorzugsweise leistungsbegrenztes Netzteil, welches zum Aufladen des Energiespeichers dient.

Hinsichtlich des Feldgerätes wird die Aufgabe durch ein Feldgerät zur Verwendung in einer Vorrichtung gemäß einer der vorgenannten Ausführungsformen gelöst.

Die Erfindung wird anhand der nachfolgenden Zeichnungen näher erläutert. Es zeigt:

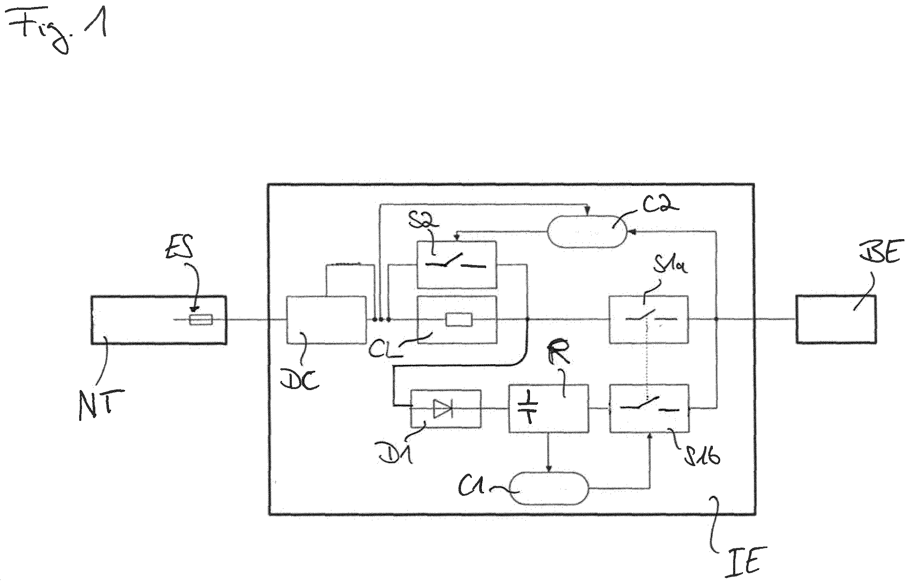

Fig. 1 ein Blockschaltbild eines Netzteils, welches Netzteil mit einer Inbetriebnahmeeinheit verbunden ist und welche Inbetriebnahmeeinheit wiederum mit einem Feldgerät beziehungsweise einer Baugruppe eines Feldgerätes verbunden ist.

Bei dem in Fig. 1 gezeigten Netzteil NT handelt es sich um eine Gleichspannungsquelle, die in dem hier gezeigten Ausführungsbeispiel leistungsbegrenzt ist. Die Leistungsbegrenzung wird dabei durch eine elektronische Sicherung ES ermöglicht, welche elektronische Sicherung ES den von der Gleichspannungsquelle beziehbaren Strom begrenzt. Durch diese elektronische Sicherung wird, die von dem Netzteil NT beziehbare Leistung begrenzt.

Die elektronische Sicherung ES kann also insbesondere zur Begrenzung des von dem Netzteil NT beziehbaren Stroms dienen. Insbesondere kann die Begrenzung auf einen Schwellwert unterhalb eines, durch die Zündschutzart Eigensicherheit vorgegebenen Grenzwertes erfolgen. Die Leistungsbegrenzung des Netzteils NT kann insbesondere durch Abschalten des Netzteils NT bei Erreichen eines Mindeststromwertes oder durch eine Strombegrenzung mittels eines Widerstandes erfolgen.

Viele Feldgeräte benötigen beim Start jedoch kurzzeitig erheblich mehr Strom, der üblicherweise als Anlaufstrom bezeichnet wird, als im späteren Betrieb. Es kann also der Fall eintreten, dass Feldgeräte deren Anlaufstrom den maximal lieferbaren Strom eines Speisegerätes, wie beispielsweise eines Netzteils NT für den Ex-Bereich, überschreiten, nicht gestartet werden können, obwohl die zulässigen Kennwerte für den Betrieb im Ex-Bereich nicht überschritten werden. Um die zum Start eines Feldgerätes erforderliche Leistung trotzdem zur Verfügung zu stellen, ist ein Energiespeicher R in der Inbetriebnahmeeinheit vorgesehen.

Der Energiespeicher R dient dazu, die zum Start benötigte Leistung kurzfristig zur Verfügung zu stellen ohne dabei jedoch die maximale durch die Zündschutzart Eigensicherheit vorgegebene Leistungsbegrenzung zu überschreiten. Nach dem Verbinden der Inbetriebnahmeeinheit IE mit dem Netzteil NT oder einer anderen Gleichspannungsquelle wird die für den Start des Feldgerätes benötigte Energie zunächst in einem Energiespeicher R gespeichert. Erst wenn dieser Energiespeicher R genügend Energie enthält, wird der Energiespeicher R beziehungsweise der Ausgang der Inbetriebnahmeeinheit IE zum Feldgerät freigegeben. Die dabei von der Inbetriebnahmeeinheit IE an das Feldgerät abgegebene Leistung ist dabei entsprechend den Grenzwerten der Zündschutzart Eigensicherheit begrenzt. Das eigentliche Starten des Feldgerätes bzw. die Energieversorgung des Feldgerätes erfolgt also erst nachdem der Energiespeicher R bis auf einen vorgegebenen Wert geladen ist.

Die in Fig. 1 gezeigte Inbetriebnahmeeinheit IE ist dabei wie folgt aufgebaut. Die von dem Netzteil NT bezogene Spannung wird von einem Gleichspannungswandler auf einen Gleichspannungswert DC transformiert, der im Normalbetrieb des Feldgerätes zum Betreiben des Feldgerätes dient. Beispielsweise kann vorgesehen sein, dass der Gleichspannungswandler DC je nach ausgangsseitig an die Inbetriebnahmeeinheit IE angeschlossenem Feldgerät unterschiedliche Spannungswerte, wie beispielsweise Spannungswerte von 9V, 10V oder 11V in Abhängigkeit des angeschlossenen Feldgerätes ausgibt.

Zwischen dem Gleichspannungswandler DC und dem Ausgang der Inbetriebnahmeeinheit IE ist eine Strombegrenzung CL und ein erster Schalter S1a vorgesehen. Die Strombegrenzung ist dabei mittels eines zweiten Schalters der parallel zur Strombegrenzung angeordnet ist überbrückbar. Zwischen der Strombegrenzung und dem ersten Schalter S1a ist ein Abgriff vorgesehen, welcher über eine Diode D1 und ein Energiespeicher R in Form eines Kondensators sowie bei einem zweiten Schalter S1b jedenfalls mit dem Ausgang der Inbetriebnahmeeinheit IE verbunden ist.

Zudem ist eine erste Steuereinheit C1 vorgesehen, die die in dem Energiespeicher R vorhandene elektrische Energie überwacht und gegebenenfalls dem zweiten Schalter S1b auslöst, sodass ab einem bestimmten Wert, der in dem Energiespeicher R gespeicherten elektrischen Energie, der zweite Schalter S1b geschlossen wird und die in dem Energiespeicher R gespeicherte Energie an dem Ausgang der Inbetriebnahmeeinheit IE zur Verfügung steht.

Der erste Schalter ist S1a und der zweite Schalter S1b ist, sind dabei bevorzugt vermittels der ersten Steuereinheit C1 schaltbar, sodass die erste Steuereinheit C1 dazu dient, den ersten Schalter S1a und den zweiten Schalter S1b zu schalten.

Die am Ausgang der Inbetriebnahmeeinheit IE vorliegende Spannung wird vermittels einer zweiten Steuereinheit C2 zurückgelesen, vermittels welcher zweiten Steuereinheit C2 der zur Überbrückung der Strombegrenzungseinheit CL dienende Schalter, schaltbar ist. Zu diesem Zweck ist am Ausgang der Inbetriebnahmeeinheit IE sowie zwischen dem Gleichspannungswandler DC und der Strombegrenzungseinheit CL ein Abgriff vorgesehen, der zum Vergleich der von dem Gleichspannungswandler DC und der an dem Ausgang der Inbetriebnahmeeinheit IE vorliegenden Spannung dient. Durch die Messung des Spannungsabfalls über der Strombegrenzung CL, die beispielsweise aus einem ohmscher Widerstand besteht, kann somit festgestellt werden, wie groß der Spannungsabfall über der Strombegrenzungseinheit CL ist und dabei auf den Leistungsbedarf des Feldgerätes geschlossen werden. Dieser Leistungsbedarf ist, wie bereits erwähnt, während des Startvorgangs des Feldgerätes erhöht und in dem Normalbetrieb des Feldgerätes im Wesentlichen konstant. Stellt sich also ein im Wesentlichen konstanter Spannungsabfall über der Strombegrenzungseinheit CL ein, kann die zweite Steuereinheit C2 dem Schalter S2 zur Überbrückung der Strombegrenzungseinheit schließen, sodass die Strombegrenzungseinheit CL überbrückt wird und die von dem Gleichspannungswandler DC ausgegebene Spannung am Ausgang der Inbetriebnahmeeinheit IE zur Verfügung steht.

Zur Inbetriebnahme des Feldgerätes ist der erste und der zweite Schalter S1a und S1b also geöffnet, sodass die Energiespeicher R von dem Netzteil NT geladen wird, bis vermittels die ersten Steuereinheit C1 eine ausreichende Ladung des Energiespeichers R erkannt wird und der erste Schalter S1a und der zweite Schalter S1b geschlossen werden.

Nachdem vermittels der zweiten Steuereinheit C2 der Normalbetrieb des Feldgerätes erkannt wurde, wird auch der Schalter S2 zur Überbrückung der Strombegrenzungseinheit geschlossen, sodass die von dem Netzteil NT und dem Gleichspannungswandler DC bereitgestellte Spannung an dem Ausgang der Inbetriebnahmeeinheit IE dem Feldgerät zur Verfügung steht.

Der Spannungswandler DC kann ferner einen Rücklesepfad aufweisen, über welchen die von dem Spannungswandler DC ausgegebene Spannung auf einen vorgegebenen Spannungswert geregelt wird.

Die Inbetriebnahmeeinheit kann bspw. Bestandteil eines Feldgerätes sein oder in Form eines Adapters als Vorrichtung, die bspw. an das Netzteil, das Feldgerät oder zwischen Netzteil und das Feldgerät angeschlossen werden kann, ausgestaltet sein.

### Bezugszeichenliste

- NT: Netzteil
- ES: Elektronische Sicherung
- DC: Gleichspannungswandler
- S1a: Erster Schalter
- S1b: Zweiter Schalter
- S2: Dritter Schalter
- CL: Strombegrenzungseinheit
- D1: Diode
- C1: Erste Steuereinheit
- C2: Zweite Steuereinheit
- R: Energiespeicher
- BE: Betriebselektronik

## Patentansprüche

1. Verfahren zur Inbetriebnahme eines Feldgerätes zur Steuerung oder Überwachung eines Prozesses, umfassend:
- Zuführen einer Spannung an eine Inbetriebnahmeeineinheit mittels eines Netzteils, welche Inbetriebnahmeeinheit einen Energiespeicher (R) zur Speicherung elektrischer Energie umfasst,
- Laden des Energiespeichers zur Inbetriebnahme des Feldgeräts,
- Zuführen der gespeicherten elektrischen Energie dem Feldgerät in Form einer Spannung mit einem zweiten Spannungswert, weicher größer als ein vom Netzteil (NT) ausgegebener erster Spannungswert ist, während der Inbetriebnahme vermittels der Inbetriebnahmeeinheit (IE), wenn die in dem Energiespeicher (R) vorhandene elektrische Energie einen vorgegebenen Schwellwert erreicht bzw. überschreitet, wobei bei der Inbetriebnahme ein zum regulären Betrieb des Feldgeräts erhöhter Spannungs- und Strombedarf des Feldgeräts vorliegt, und
- Versorgen des Feldgeräts mit elektrischer Energie, welche das Feldgerät zum Ausführen seiner bestimmungsgemäßen Funktion benötigt, nach der Inbetriebnahme in seinem regulären Betrieb mittels des Netzteils.

2. Verfahren nach dem vorherigen Anspruch,
wobei der erste als auch der zweite Spannungswert unterhalb einem durch die von einer Zündschutzart Eigensicherheit vorgegebenen Grenzspannungswert liegen,
wobei der Grenzspannungswert durch die Kategorie von Zündschutzart vorgegeben wird, für welche sich das Feldgerät eignet.

3. Verfahren nach einem der vorherigen Ansprüche,
wobei dem Feldgerät zumindest während der Inbetriebnahme sowohl in dem Energiespeicher gespeicherte elektrische Energie als auch von dem Netzteil (NT) ausgegebene elektrische Energie zur Verfügung gestellt wird.

4. Verfahren nach einem der vorherigen Ansprüche,
wobei die während der Inbetriebnahme von dem Netzteil (NT) an das Feldgerät übertragene elektrische Energie begrenzt wird.

5. Verfahren nach einem der vorherigen Ansprüche,
wobei ein sich an den Startvorgang anschließender bestimmungsgemäßer Betriebsmodus des Feldgeräteserkannt wird, indem die von der Inbetriebnahmeeinheit (IE) ausgegebene Spannung mit der der Strombegrenzungseinheit (CL) zugeführten Spannung verglichen wird.

6. Verfahren nach einem der vorherigen Ansprüche,
wobei nach Erreichen des bestimmungsgemäßen Betriebsmodus ausschließlich das Netzteil (IE) zur Energieversorgung des Feldgerätes verwendet wird.

7. Verfahren nach einem der vorherigen Ansprüche,
wobei nachdem der bestimmungsgemäße Betriebsmodus, in welchem das Feldgerät einen im Wesentlichen konstanten Spannungsbedarf aufweist, die Strombegrenzungseinheit (CL) überbrückt wird.

8. Verfahren nach einem der vorherigen Ansprüche,
wobei die von dem Netzteil (NT) ausgegebene Spannung von einem ersten Spannungswert auf einen dritten Spannungswert transformiert wird,
welcher dritte Spannungswert der Strombegrenzungseinheit zugeführt wird.

9. Vorrichtung zur Inbetriebnahme eines Feldgerätes zur Steuerung oder Überwachung eines Prozesses, umfassend ein Netzteil (NT) und eine Inbetriebnahmeeinheit (IE), welche einen Energiespeicher (R) zur Speicherung elektrischer Energie beinhaltet, wobei das Netzteil derart ausgestaltet ist, dass es das Feldgerät nach der Inbetriebnahme in seinem regulären Betrieb mit elektrischer Energie, welche das Feldgerät zum Ausführen seiner bestimmungsgemäßen Funktion benötigt, versorgt und dass es eine Spannung mit einem ersten Spannungswert ausgibt, welche Spannung der Inbetriebnahmeeinheit (IE) zugeführt wird, und
wobei die Inbetriebnahmeeinheit (IE) derart ausgestaltet ist, dass zur Inbetriebnahme des Feldgerätes der Energiespeicher (R) zur Speicherung elektrischer Energie vermittels des Netzteils (NT), geladen wird, und dass, wenn die in dem Energiespeicher (R) vorhandene elektrische Energie einen vorgegebenen Schwellwert erreicht bzw. überschreitet, die vermittels der Inbetriebnahmeeinheit (IE) gespeicherte elektrische Energie dem Feldgerät in Form einer Spannung mit einem zweiten Spannungswert, welcher größer als der vom Netzteil (NT) ausgegebene erste Spannungswert ist, zugeführt wird, wobei bei der Inbetriebnahme ein zum regulären Betrieb des Feldgeräts erhöhter Spannungs- und Strombedarf des Feldgeräts vorliegt.

10. Feldgerät zur Verwendung in einer Vorrichtung nach Anspruch 9.

## Claims

1. Procedure for commissioning a field device for controlling or monitoring a process, comprising:
- The supply of a voltage to a commissioning unit by means of a power unit, wherein said commissioning unit comprises an energy accumulator (R) designed to store electrical energy,
- Charging of the energy accumulator to commission the field device,
- The supply of the stored electrical energy to the field device in the form of a voltage with a second voltage value - which is greater than a first voltage value output by the power unit (NT) - during commissioning by means of the commissioning unit (IE) when the electrical energy saved in the energy accumulator (R) reaches or exceeds a predefined threshold value, wherein, during commissioning, the voltage requirement and power requirement of the field device is higher than during the regular operation of the field device, and
- Supplying the field device with electrical energy which the field device requires to perform its designated function, after commissioning, in its regular operating mode by means of the power unit.

2. Procedure as claimed in the previous claim,
wherein the first and the second voltage value are less than a limit voltage value specified by an intrinsic safety type of protection, wherein the limit voltage value is specified by the category of the type of protection for which the field device is suitable.

3. Procedure as claimed in one of the previous claims,
wherein electrical energy saved in the energy accumulator and electrical energy output by the power unit (NT) are both made available to the field device at least during commissioning.

4. Procedure as claimed in one of the previous claims,
wherein the electrical energy supplied to the field device by the power unit (NT) during commissioning is limited.

5. Procedure as claimed in one of the previous claims,
wherein a designated operating mode of the field device, which continues on from the start process, is detected by comparing the voltage output by the commissioning unit (IE) with the voltage supplied to the current limiting unit (CL).

6. Procedure as claimed in one of the previous claims,
wherein only the power unit (IE) is used to supply energy to the field device once the designated operating mode has been reached.

7. Procedure as claimed in one of the previous claims,
wherein the current limiting unit (CL) is bridged after the designated operating mode in which the field device has an essentially constant voltage demand.

8. Procedure as claimed in one of the previous claims,
wherein the voltage output by the power unit (NT) is transformed from a first voltage value to a third voltage value, said third voltage value being supplied to the current limiting unit.

9. Apparatus designed to commission a field device for controlling or monitoring a process, comprising a power unit (NT) and a commissioning unit (IE), said commissioning unit having an energy accumulator (R) to store electrical energy, wherein the power unit is designed in such a way that it supplies the field device with electrical energy in the field device's regular operating mode after commissioning, said electrical energy being the energy the field device requires to perform its designated function, and in such a way that it outputs a voltage with a first voltage value, said voltage being supplied to the commissioning unit (IE), and wherein the commissioning unit (IE) is designed in such a way that - for the purpose of commissioning the field device - the system charges the energy accumulator (R) for storing the electrical energy using the power unit (NT), and in that when the electrical energy in the energy accumulator (R) reaches or exceeds a predefined threshold value, the electrical energy stored by means of the commissioning unit (IE) is supplied to the field device in the form of a voltage with a second voltage value which is greater than the first voltage value output by the power unit (NT), wherein - during commissioning - the voltage requirement and power requirement of the field device is higher than during the regular operation of the field device.

10. Field device to be used in an apparatus as claimed in Claim 9.

## Revendications

1. Procédé destiné à la mise en service d'un appareil de terrain pour la commande ou la surveillance d'un process, comprenant :
- Fourniture d'une tension à une unité de mise en service au moyen d'un bloc d'alimentation, laquelle unité de mise en service comprend un accumulateur d'énergie (R) destiné à l'accumulation d'une énergie électrique,
- Charge de l'accumulateur d'énergie pour la mise en service de l'appareil de terrain,
- Fourniture de l'énergie électrique accumulée à l'appareil de terrain sous la forme d'une tension avec une deuxième valeur de tension, laquelle est supérieure à une première valeur de tension délivrée par le bloc d'alimentation (NT), pendant la mise en service au moyen de l'unité de mise en service (IE), lorsque l'énergie électrique présente dans l'accumulateur d'énergie (R) atteint ou dépasse une valeur seuil prédéfinie, un besoin en tension et en courant de l'appareil de terrain étant supérieur que dans un fonctionnement normal de l'appareil de terrain pendant la mise en service, et
- Alimentation de l'appareil de terrain avec une énergie électrique, dont l'appareil de terrain a besoin pour l'exécution de sa fonction conforme à l'emploi prévu, après la mise en service dans son fonctionnement normal au moyen du bloc d'alimentation.

2. Procédé selon la revendication précédente,
pour lequel la première et la deuxième valeur de tension sont inférieures à une valeur de tension de seuil prédéfinie par un mode de protection Ex à sécurité intrinsèque, la valeur de tension de seuil étant prédéfinie par la catégorie du mode de protection Ex, pour lequel l'appareil de terrain est adapté.

3. Procédé selon l'une des revendications précédentes,
pour lequel une énergie électrique accumulée dans l'accumulateur d'énergie et une énergie électrique fournie par le bloc d'alimentation (NT) sont mises à la disposition de l'appareil de terrain pendant la mise en service.

4. Procédé selon l'une des revendications précédentes,
pour lequel l'énergie électrique transmise par le bloc d'alimentation (NT) à l'appareil de terrain pendant la mise en service est limitée.

5. Procédé selon l'une des revendications précédentes,
pour lequel un mode fonctionnement de l'appareil de terrain, conforme à l'emploi prévu et consécutif à la phase de démarrage, est reconnu en ce que la tension délivrée par l'unité de mise en service (IE) est comparée avec la tension fournie à l'unité de limitation de courant (CL).

6. Procédé selon l'une des revendications précédentes,
pour lequel, après l'atteinte du mode de fonctionnement conforme à l'emploi prévu, seul le bloc d'alimentation (NT) est utilisé pour l'alimentation en énergie de l'appareil de terrain.

7. Procédé selon l'une des revendications précédentes,
pour lequel, après le mode de fonctionnement conforme à l'emploi prévu, dans lequel l'appareil de terrain présente un besoin en tension pour l'essentiel constant, l'unité de limitation de courant (CL) est court-circuitée.

8. Procédé selon l'une des revendications précédentes,
pour lequel la tension délivrée par le bloc d'alimentation (NT) est transformée d'une une première valeur de tension à une troisième valeur de tension, laquelle troisième valeur de tension est fournie à l'unité de limitation de courant.

9. Dispositif destiné à la mise en service d'un appareil de terrain pour la commande ou la surveillance d'un process, comprenant un bloc d'alimentation (NT) et une unité de mise en service (IE), laquelle comprend un accumulateur d'énergie (R) pour l'accumulation d'énergie électrique, le bloc d'alimentation étant conçu de telle sorte qu'il alimente l'appareil de terrain après la mise en service dans un mode de fonctionnement normal avec une énergie électrique, dont l'appareil de terrain a besoin pour l'exécution de sa fonction conforme à l'emploi prévu, et de telle sorte qu'il délivre une tension avec une première valeur de tension, laquelle tension est fournie à l'unité de mise en service (IE), et
dispositif pour lequel l'unité de mise en service (IE) est conçue de telle sorte que, pour la mise en service de l'appareil de terrain, l'accumulateur d'énergie (R) est chargé au moyen du bloc d'alimentation (NT) pour l'accumulation d'une énergie électrique, et de telle sorte que, lorsque l'énergie électrique présente dans l'accumulateur d'énergie atteint ou dépasse une valeur seuil prédéfinie, l'énergie électrique accumulée au moyen de l'unité de mise en service (IE) est fournie à l'appareil de terrain sous la forme d'une tension avec une deuxième valeur de tension, laquelle deuxième valeur est supérieure à la première valeur de tension délivrée par le bloc d'alimentation (NT), un besoin en tension et en courant de l'appareil de terrain étant supérieur que dans un fonctionnement normal de l'appareil de terrain pendant la mise en service

10. Appareil de terrain destiné à une utilisation dans un dispositif selon la revendication 9.
